# DEMANDE DE BREVET EUROPEEN

(11) **EP 2 020 320 A1**
(43) Date de publication de la demande: **04.02.2009**
(21) Numéro de dépôt: 08161214.5
(22) Date de dépôt: 25.07.2008
(51) Int. Cl.: B60J 1/20, B60R 5/04

(54) **Dispositif d'occultation pour véhicule automobile et véhicule correspondant**

(30) Priorité: 03.08.2007 FR 0756949
(71) Demandeur: Wagon SAS, 79302 Bressuire Cédex (FR)
(72) Inventeur: Chemineau, Nicolas, 85310 Chaille sous les Ormeaux (FR)
(74) Mandataire: Bioret, Ludovic

(57) **Abrégé**

L'invention concerne un dispositif d'occultation (10) pour une surface vitrée de véhicule automobile, comprenant des moyens d'occultation (11) pouvant prendre au moins deux positions, une position repliée et au moins une position déployée, et dont une première extrémité (1111) est solidarisée à une barre de tirage (14) et une deuxième extrémité (1121) est solidarisable à un élément fixe (113) dudit véhicule.

Selon l'invention, un tel dispositif comprend des moyens de stockage (12) desdits moyens d'occultation (11) montés entre lesdites première et deuxième extrémités, de façon que lesdits moyens d'occultation (11) soient déployés de part et d'autre desdits moyens de stockage (12),
lesdits moyens de stockage (12) comprenant des moyens de mise en forme destinés à maintenir lesdits moyens d'occultation (11) dans une forme galbée prédéterminée dans la ou lesdites positions déployées.

## Description

### 1. Domaine de l'invention

Le domaine de l'invention est celui des véhicules automobiles, et notamment des véhicules présentant une surface vitrée importante. Plus précisément, l'invention concerne l'occultation de telles surfaces vitrées, pour se protéger des rayons du soleil.

De façon générale, l'invention peut être mise en oeuvre pour occulter diverses surfaces d'un véhicule, et notamment des surfaces vitrées sensiblement horizontales, par exemple au niveau d'un pavillon vitré, et/ou des surfaces vitrées inclinées, par exemple au niveau d'une lunette arrière.

### 2. Solutions et inconvénients de l'art antérieur

Une tendance actuelle, en matière de véhicule automobile, est de proposer de plus en plus de surfaces vitrées. On cherche donc à augmenter tant que faire se peut la surface des pare-brise, des vitres latérales, des lunettes arrière, et également la surface vitrée des pavillons.

On a ainsi proposé des surfaces vitrées multiples, par exemple sous la forme de deux ou trois éléments, dont certains peuvent former toit ouvrant.

On développe également des pavillons intégralement, ou essentiellement, vitrés, et ne faisant qu'un, au moins visuellement, avec le pare-brise (absence d'un élément de carrosserie extérieur entre les deux).

Les objectifs de ces développements sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique générale du véhicule ;
- ...

On comprend qu'il est alors nécessaire de prévoir des moyens d'occultation, pour protéger l'habitacle et ses occupants du soleil. Des stores à toile d'occultation amovible, tels que les stores à enrouleur, selon que l'on souhaite ou non occulter la lumière, sont classiquement mis en oeuvre pour l'occultation des surfaces vitrées.

L'enroulement de la toile sur le tube d'enroulement est souvent assuré par des moyens de rappel logés à l'intérieur du tube d'enroulement, dénommé usuellement tube à enrouleur dans ce cas. En outre, des moyens de motorisation de la rotation du tube d'enroulement peuvent éventuellement être prévus. D'autre part, l'extrémité libre de la toile peut classiquement être entraînée à l'aide d'une barre de tirage.

Lorsque la surface à occulter est essentiellement plane, l'occultation de celle-ci ne pose pas de problème particulier, la toile étant, généralement, convenablement maintenue en position déployée le long de cette surface. En revanche, dans le cas d'une surface incurvée, cette technique ne permet pas de déployer efficacement une toile en regard de celle-ci, de façon que la toile épouse la forme de la vitre.

Lorsque le galbe de la vitre est essentiellement selon le sens de déploiement de la toile (galbe longitudinal), il sera possible de prévoir des rails de part et d'autre des bords latéraux de la toile de façon à maintenir celle-ci le long de la vitre et que la toile épouse le galbe de celle-ci, par exemple.

En revanche, lorsque le galbe de la surface vitrée est, au contraire, perpendiculaire au sens de déploiement de la toile (galbe transversal), cela n'est pas possible. Ainsi, dans le cas d'un pavillon bombé dans le sens de la largeur du véhicule par exemple, lors du déploiement d'un store classique selon une direction longitudinale par rapport au véhicule, une zone longitudinale centrale de la toile reste relativement éloignée du pavillon.

Or, les pavillons des véhicules, ainsi que les lunettes arrière et les pare-brise, sont de plus en plus souvent non plats. Plus précisément, les pavillons, les lunettes arrière et les pare-brise sont désormais couramment incurvés ou galbés, au moins dans le sens de la largeur (galbe transversal) et également parfois dans le sens de la longueur. Ils forment en outre parfois un ensemble vitré continu, ou quasi-continu.

Le rendu esthétique d'un store n'est donc généralement pas satisfaisant à l'aide d'un store à enrouleur classique et l'occultation n'est pas optimale. En effet, un des problèmes est que le tube à enrouleur d'un store à enrouleur classique est généralement rectiligne et qu'en conséquence, il s'éloigne de la vitre à occulter en sa partie centrale. L'écart entre la toile et la vitre reste donc visible au voisinage d'un tel tube et est susceptible de laisser passer la lumière dans l'habitacle.

D'autre part, s'il est connu de galber la barre de tirage d'un store classique pour permettre à l'extrémité libre de la toile d'épouser la forme de la vitre, le déploiement de la toile au moyen d'une barre de tirage galbée et d'un tube à enrouleur rectiligne pose des problèmes d'homogénéité du tendu de la toile, qui est donc de mauvaise qualité.

On a pensé à réaliser des tubes à enrouleur galbés, mais leur mise en oeuvre est peu aisée.

Un autre inconvénient des solutions techniques connues de tubes galbés est que de tels stores présentent un encombrement important, avant montage, et sont difficiles à stocker.

Selon une autre technique connue, la toile est mise en forme dans la direction transversale, perpendiculaire à la direction de déploiement de la toile, au moyen d'une ou plusieurs baleines de renfort galbées.

Un inconvénient de cette technique est que les baleines forment une surépaisseur lorsqu'elle s'enroulent sur le tube à enrouleur, ce qui accroît l'encombrement d'un tel store.

Un autre inconvénient de cette solution technique connue est la difficulté d'aplatir chaque baleine galbée pour l'enrouler sur le tube rectiligne, compte tenu de sa rigidité propre.

Encore d'autres inconvénients de cette technique sont l'usure et la déformation de la toile due à la présence et/ou au frottement sur de telles baleines.

### 3. Objectifs de l'invention

L'invention a notamment pour objectif de pallier ces inconvénients de l'art antérieur.

Plus précisément, l'invention a pour objectif de proposer un store qui permet de réaliser l'occultation complète, ou à tout le moins optimisée, de surfaces de formes complexes et/ou étendues telles que celles des pavillons mentionnés en référence à l'art antérieur.

En ce sens, l'invention a notamment pour objectif de fournir un tel store d'occultation qui permet de déployer la toile de façon à faire correspondre celle-ci à la forme courbe d'une surface vitrée, et notamment à proximité de son tube à enrouleur.

Un objectif important de l'invention est en outre de fournir un store dont l'encombrement est réduit lorsqu'il est monté dans le véhicule.

Encore un autre objectif de l'invention est de fournir un store d'occultation pour véhicule automobile qui soit efficace et qui présente un aspect visuel de bonne qualité, lorsqu'il est déployé.

Un objectif autre de l'invention est également de proposer un store dont le procédé de fabrication reste simple et relativement peu coûteux à mettre en oeuvre, et dont le montage est aisé.

### 4. Exposé de l'invention

Ces objectifs, ainsi que d'autres qui apparaîtront par la suite, sont atteints à l'aide d'un dispositif d'occultation pour une surface vitrée de véhicule automobile, comprenant des moyens d'occultation pouvant prendre au moins deux positions, une position repliée et au moins une position déployée, et dont une première extrémité est solidarisée à une barre de tirage et une deuxième extrémité à un élément fixe dudit véhicule.

Selon l'invention, un tel dispositif comprend des moyens de stockage desdits moyens d'occultation montés entre lesdites première et deuxième extrémités, de façon que lesdits moyens d'occultation soient déployés de part et d'autre desdits moyens de stockage, lesdits moyens de stockage comprenant des moyens de mise en forme destinés à maintenir lesdits moyens d'occultation dans une forme galbée prédéterminée dans la ou lesdites positions déployées.

Ainsi, selon cette technique, on obtient, de façon simple et efficace, des moyens d'occultation, tels que par exemple formés d'éléments de toile, présentant un aspect satisfaisant lorsqu'ils sont déployés pour, notamment, occulter au moins une partie d'une surface vitrée galbée. En effet, ces moyens d'occultation peuvent épouser la forme de la vitre aussi bien à ses extrémités, puisqu'il est aisé de donner une forme galbée adaptée à l'élément fixe et à la barre de tirage, que dans sa partie centrale, ceux-ci pouvant être maintenus tendus avec une forme galbée convenable à l'aide des moyens de stockage.

De façon préférée, lesdits moyens de stockage comprennent des moyens de contrôle du déploiement et du repliement desdits moyens d'occultation de façon que lesdits moyens de stockage soient sensiblement maintenus à mi-distance desdites première et deuxième extrémités dans chacune desdites positions.

Ainsi, on obtient, de façon appréciable, un aspect galbé homogène des moyens d'occultation quelle que soit la position déployée.

Dans au moins un mode de réalisation particulier de l'invention, lesdits moyens de mise en forme comprennent des premiers éléments de mise en forme, agissant sur une première portion desdits moyens d'occultation déployée vers ladite première extrémité et des deuxièmes éléments de mise en forme, agissant sur une deuxième portion desdits moyens d'occultation déployée vers ladite deuxième extrémité.

Préférentiellement, lesdits moyens de mise en forme comprennent au moins un élément de renfort sensiblement galbé destiné à imprimer auxdits moyens d'occultation au moins un galbe prédéterminé.

Ainsi, les moyens d'occultation présentent une rigidité accrue.

Selon un mode de réalisation particulier de l'invention, lesdits moyens de stockage et/ou lesdits moyens de mise en forme comportent au moins un élément flexible.

Ainsi, lors du montage du dispositif, on peut aisément donner une courbure ou une forme souhaitée aux moyens de stockage et/ou aux moyens de mise en forme. Par ailleurs, il devient aisé d'adapter le galbe des moyens de stockage à celui de la vitre pour chacune des positions déployées, en faisant varier la forme de l'élément flexible.

Selon un mode de réalisation avantageux de l'invention, lesdits moyens d'occultation comprennent un premier élément d'occultation comprenant ladite première extrémité et un deuxième élément d'occultation comprenant ladite deuxième extrémité, de dimensions sensiblement identiques suivant la direction de déploiement desdits moyens d'occultation, et lesdits moyens de stockage comprennent des moyens d'enroulement desdits premier et deuxième éléments d'occultation.

Ainsi, on réalise avantageusement un dispositif symétrique. Dans un mode de réalisation particulier de l'invention, les moyens de stockage peuvent comprendre deux tubes à enrouleur juxtaposés pour enrouler ou déployer chacun l'un des premier ou deuxième éléments d'occultation. Dans au moins un mode de réalisation particulier de l'invention, il est prévu que les moyens d'enroulement permettent de dérouler ou de déployer des portions respectives sensiblement identiques des premier et deuxième éléments d'occultation.

De façon avantageuse, lesdits moyens d'enroulement comprennent au moins un tube à enrouleur comprenant des moyens de rappel tendant à ramener lesdits premier et deuxième éléments d'occultation dans une position enroulée.

Ainsi, les premier et deuxième éléments d'occultation restent en permanence tendus.

Selon un aspect avantageux, ledit tube à enrouleur comprend des moyens de solidarisation auxdits premier et deuxième éléments d'occultation de façon à permettre de les enrouler ou déployer simultanément.

Ainsi, en actionnant le tube à enrouleur, on peut enrouler ou déployer simplement les portions des premier et deuxième éléments d'occultation.

Selon un mode de réalisation particulièrement avantageux de l'invention, lesdits moyens de solidarisation sont sensiblement disposés de façon diamétralement opposés sur ledit tube.

Ainsi, une rotation du tube permet d'entraîner avec une tension identique le premier et le deuxième élément d'occultation, ce qui permet de limiter les risques de glissement d'un de ces éléments d'occultation par rapport à l'autre lors de leur enroulement sur le tube ou de leur déploiement. Par ailleurs, suivant cette disposition technique, des couches successives des premier et deuxième éléments d'occultation peuvent être enroulés simplement et alternativement sur le tube, sans risque d'interférence ou de générer des replis.

Selon un aspect préférentiel, lesdits moyens de mise en forme comprennent des moyens d'appui et/ou de support d'au moins une portion desdits moyens d'occultation dans une direction sensiblement perpendiculaire à la direction de déploiement, formés ou solidarisés auxdits moyens de stockage, de façon à maintenir la surface desdits moyens d'occultation sensiblement dans un même plan lors de son déploiement ou de son repliement.

Ainsi, les premier et deuxième éléments d'occultation peuvent être maintenus sensiblement dans un même plan, parallèle à celui de la vitre, ce qui donne un aspect plan appréciable à la surface des moyens d'occultation.

Selon un mode de réalisation particulier de l'invention, lesdits moyens de stockage comprennent des moyens de guidage destinés à coulisser dans au moins un rail.

Ainsi, on peut contrôler le mouvement des moyens de stockage.

De façon avantageuse, lesdits moyens de guidage coopèrent avec des moyens de blocage dans au moins une position prédéterminée intermédiaire entre ladite position repliée et ladite au moins une position déployée.

Ainsi, la position de l'élément d'occultation peut être verrouillée lorsque celui-ci est déployé.

Dans au moins un mode de réalisation particulier de l'invention, lesdits moyens de guidage coulissant dans deux rails non parallèles, lesdits moyens de stockage comprennent des moyens de compensation de l'écartement variable desdits rails.

Ainsi, un tel dispositif peut permettre d'occulter entièrement et convenablement une surface vitrée dont les bords ne sont non parallèles, telle que notamment la surface d'un pavillon entièrement vitré prolongeant un pare-brise de certains véhicules actuels.

Préférentiellement, lesdits moyens de guidage sont motorisés.

Ainsi, on peut déployer ou replier automatiquement un tel dispositif d'occultation, par exemple à l'aide d'un bouton de commande déporté.

Avantageusement, au moins un des dispositifs tels que décrits ci-dessus est destiné à occulter au moins un des éléments appartenant au groupe comprenant :
- les pavillons ;
- les pare-brise à partir de l'intérieur et/ou de l'extérieur de l'habitacle dudit véhicule ;
- les vitres latérales ;
- les vitres de custode ;
- les vitres arrière ;
- les toits ouvrants ; et/ou
- les espaces destinés à recevoir les bagages.

L'invention telle que présentée concerne également tout véhicule automobile comprenant un des dispositifs d'occultation tels que décrits ci-dessus.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une vue en perspective d'un dispositif d'occultation selon un mode de réalisation de l'invention ;
- la figure 2 est une vue de détail des moyens de compensation de l'écartement des rails de guidage des moyens de stockage du dispositif présenté à la figure 1 ;
- la figure 3 illustre une vue de détail d'une coupe d'une extrémité d'un tube à enrouleur du dispositif présenté à la figure 1.

### 6. Description détaillée

### 6.1. Rappel du principe de l'invention

Le principe général de l'invention repose donc sur une mise en oeuvre de moyens mobile de stockage et de mise en forme des moyens d'occultation, encore appelé toile ou rideau, d'un dispositif d'occultation, de façon à ce qu'ils présentent un aspect visuel acceptable et homogène quelle que soit leur position déployée.

Un tel dispositif est notamment destiné à permettre d'occulter de façon simple et efficace une surface non plane, telle que par exemple une surface de pavillon panoramique intégralement ou en grande partie vitré ou une lunette arrière de véhicule, et présente l'avantage d'occuper un volume réduit lorsqu'il est monté dans l'habitacle d'un véhicule.

### 6.2. Description d'un mode de réalisation particulier de l'invention

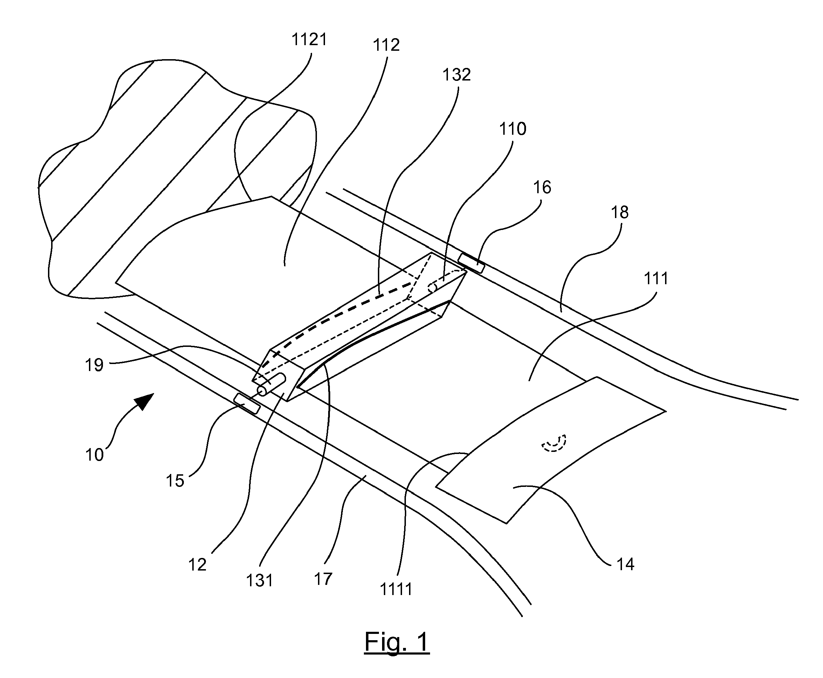

On présente en référence à la figure 1, dans une position déployée intermédiaire, un dispositif d'occultation selon l'invention destiné à être monté sur le pavillon d'un véhicule automobile pour occulter une surface vitrée de ce dernier.

Dans ce mode de réalisation particulier de l'invention illustré par la figure 1, ce dispositif est mis en oeuvre sous la forme d'un store 10 pourvu d'un unique tube à enrouleur (non représenté sur cette figure) pour l'enroulement et le déroulement de la surface d'occultation.

Ce dispositif 10 comprend ainsi des moyens d'occultation, encore appelé toile, 11 comprenant un premier élément d'occultation 111 et un deuxième élément d'occultation 112 en matière souple et opaque déployés de part et d'autre de moyens de stockage 12 au travers des fentes 131, 132 d'un boîtier de stockage 13. Les éléments d'occultation 111 et 112 sont de dimension sensiblement identique dans la direction de déploiement. Une barre de tirage 14 est montée à l'extrémité 1111 du premier élément de toile 111 pour déployer ou replier les éléments 111 et 112 dans le même mouvement. L'extrémité 1121 du deuxième élément de toile 112 est solidarisée par exemple par collage (ou tout autre technique adaptée, telle que le clippage, le rivetage, ...) à la garniture interne 113 du pavillon.

Les fentes 131, 132 du boîtier de stockage 13, ou éléments de renfort, présentent une forme galbée incurvée qui permet de donner aux éléments d'occultation 111 et 112 une courbure adaptée à celle de la surface vitrée du pavillon.

Comme précisé par la suite, le boîtier de stockage 13 comprend dans ce mode de réalisation particulier un tube à enrouleur permettant de maintenir en permanence le boîtier à mi-distance des extrémités 1111 et 1121. Dans des variantes de ce mode de réalisation, on peut également prévoir des moyens de contrôle automatiques pour mesurer et ajuster la longueur de toile d'occultation déroulée de chaque côté du boîtier.

Chaque extrémité du boîtier 13 repose sur des patins de guidage 15, 16, coulissant dans des rails de guidage 17, 18 fixés sur les longerons du pavillon. De tels rails 17, 18 étant non parallèles pour tenir compte du profil du pavillon qui s'élargit dans la zone adjacente au pare-brise, des moyens identiques de compensation 19, 110 de l'écart variable entre les rails relient les patins au boîtier.

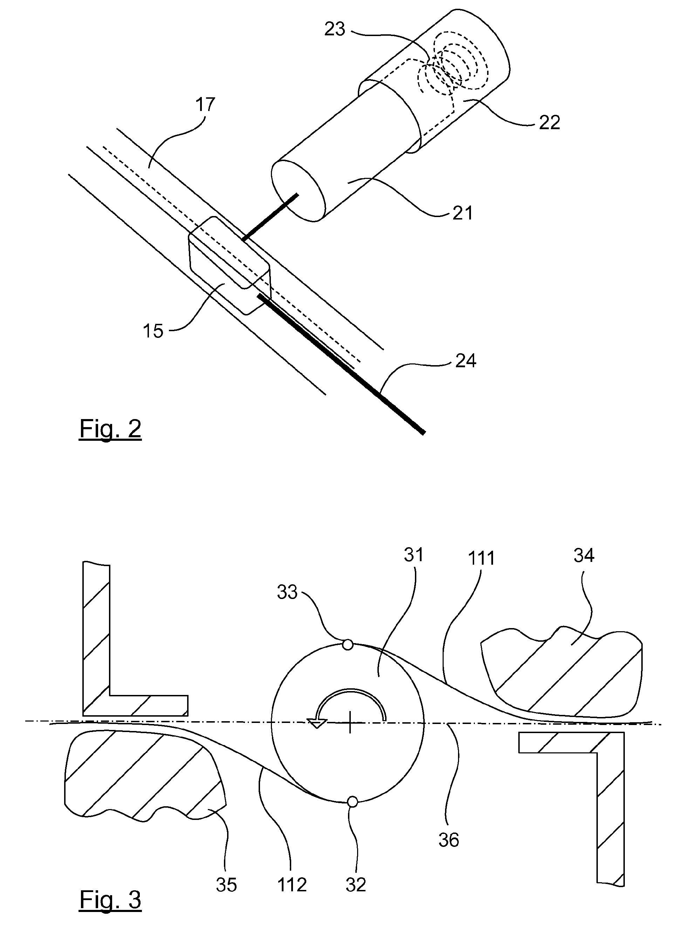

Comme illustré sur la figure 2 dans une vue de détail, les moyens de compensation 19 sont composés, dans ce mode de réalisation, de deux tubes concentriques 21, 22 pouvant coulisser l'un dans l'autre séparés par un ressort interne 23. La force de compression de ce ressort 23 agit pour déplacer le tube 21 fixé au patin 15 par rapport au tube 22 fixé sur le boîtier 13 et permet de maintenir en permanence le patin 15 dans le rail 17.

Le déplacement du boîtier peut être manuel (une poignée pouvant alors être prévue sur ce dernier) ou motorisé. Dans ce dernier cas, le guidage des patins 15, 16 solidaire du boîtier 13 est par exemple assuré par des câbles toronnés 24 entraînés par un moteur électrique de type moto-réducteur (non représenté).

La figure 3 illustre une vue de détail de la zone du tube à enrouleur 31. Ce tube 31, auquel sont solidarisées les extrémités 1112 et 1122 des éléments de toile 111 et 112, est monté sur des paliers à l'intérieur du boîtier 13.

La solidarisation des extrémités 1112 et 1122 au tube est mise en oeuvre dans ce mode de réalisation particulier de l'invention par collage d'une bande mince de ces toiles 111 et 112 sur le tube 31 selon des positions 32, 33 diamétralement opposées. Ainsi lors de la rotation du tube 31 dans le sens de l'enroulement des éléments de toile, des portions de celles-ci s'enroulent facilement, et notamment sans interférer, sur le tube en formant des couches successives se chevauchant alternativement sur ce dernier.

Dans des variantes de ce mode de réalisation, il peut également être envisagé des moyens de solidarisation à crochet de fixation, par zip (de type fermeture éclair), par soudure sur le tube, ...

Il convient de noter qu'en raison du décalage existant entre les lignes de déroulement des éléments de toile sur le tube, le rebord interne des fentes 131 et 132 est pourvu d'une surface d'appui 34, respectivement de support 35, sur l'élément de toile 111 et 112 pour maintenir la partie déroulée de ces éléments d'occultation 111, 112 sensiblement dans un même plan 36 lors de leur déploiement ou de leur repliement.

### 6.3. Autres caractéristiques et avantages de l'invention

La présente invention n'est bien sûr pas limitée au mode de réalisation qui vient d'être décrit. Au contraire, de nombreuses variantes peuvent être envisagées, et notamment :
- les patins, ou tous autres moyens de guidage adaptés, peuvent être prévus pour coopérer avec des moyens de blocage du boîtier dans une position intermédiaire prédéterminée entre la position repliée et une position déployée ;
- des paliers peuvent être solidarisés au tube à enrouleur et permettre le guidage et le coulissement du tube dans les rails de guidage ;
- le dispositif d'occultation peut être monté sur un hayon de véhicule pour occulter une lunette arrière.

## Revendications

1. Dispositif d'occultation (10) pour une surface vitrée de véhicule automobile, comprenant des moyens d'occultation (11) pouvant prendre au moins deux positions, une position repliée et au moins une position déployée, et dont une première extrémité (1111) est solidarisée à une barre de tirage (14) et une deuxième extrémité 1121) à un élément fixe (113) dudit véhicule, **caractérisé en ce qu'**il comprend des moyens de stockage (12) desdits moyens d'occultation (11) montés entre lesdites première et deuxième extrémités, de façon que lesdits moyens d'occultation (11) soient déployés de part et d'autre desdits moyens de stockage (12),
lesdits moyens de stockage (12) comprenant des moyens de mise en forme destinés à maintenir lesdits moyens d'occultation (11) dans une forme galbée prédéterminée dans la ou lesdites positions déployées.

2. Dispositif d'occultation selon la revendication 1, **caractérisé en ce que** lesdits moyens de stockage (12) comprennent des moyens de contrôle du déploiement et du repliement desdits moyens d'occultation de façon que lesdits moyens de stockage (12) soient sensiblement maintenus à mi-distance desdites première (1111) et deuxième (1112) extrémités dans chacune desdites positions.

3. Dispositif d'occultation selon l'une quelconque des revendications 1 et 2, **caractérisé en ce que** lesdits moyens de mise en forme comprennent des premiers éléments de mise en forme, agissant sur une première portion desdits moyens d'occultation (11) déployée vers ladite première extrémité (1111) et des deuxièmes éléments de mise en forme, agissant sur une deuxième portion desdits moyens d'occultation (11) déployée vers ladite deuxième extrémité (1121).

4. Dispositif d'occultation selon l'une quelconque des revendications 1 à 3, **caractérisé en ce que** lesdits moyens de mise en forme comprennent au moins un élément de renfort (131, 132) sensiblement galbé destiné à imprimer auxdits moyens d'occultation (11) au moins un galbe prédéterminé.

5. Dispositif d'occultation selon l'une quelconque des revendications 1 à 4, **caractérisé en ce que** lesdits moyens de stockage (12) et/ou lesdits moyens de mise en forme comportent au moins un élément flexible.

6. Dispositif d'occultation selon l'une quelconque des revendications 1 à 5, **caractérisé en ce que** lesdits moyens d'occultation (11) comprennent un premier élément d'occultation (111) comprenant ladite première extrémité (1111) et un deuxième élément d'occultation (112) comprenant ladite deuxième extrémité (1121) , de dimensions sensiblement identiques suivant la direction de déploiement desdits moyens d'occultation (11),
et **en ce que** lesdits moyens de stockage (12) comprennent des moyens d'enroulement desdits premier (111) et deuxième (112) éléments d'occultation.

7. Dispositif d'occultation selon la revendication 6, **caractérisé en ce que** lesdits moyens d'enroulement comprennent au moins un tube à enrouleur (31) comprenant des moyens de rappel tendant à ramener lesdits premier (111) et deuxième (112) éléments d'occultation dans une position enroulée.

8. Dispositif d'occultation selon la revendication 7, **caractérisé en ce que** ledit tube à enrouleur (31) comprend des moyens de solidarisation auxdits premier (111) et deuxième (112) éléments d'occultation de façon à permettre de les enrouler ou déployer simultanément.

9. Dispositif d'occultation selon la revendication 8, **caractérisé en ce que** lesdits moyens de solidarisation sont sensiblement disposés de façon diamétralement opposés sur ledit tube (31).

10. Dispositif d'occultation selon l'une quelconque des revendications 1 à 9, **caractérisé en ce que** lesdits moyens de mise en forme comprennent des moyens d'appui et/ou de support (34, 35) d'au moins une portion desdits moyens d'occultation dans une direction sensiblement perpendiculaire à la direction de déploiement, formés ou solidarisés auxdits moyens de stockage, (12) de façon à maintenir la surface desdits moyens d'occultation (11) sensiblement dans un même plan (36) lors de son déploiement ou de son repliement.

11. Dispositif d'occultation selon l'une quelconque des revendications 1 à 10, **caractérisé en ce que** lesdits moyens de stockage (12) comprennent des moyens de guidage (15, 16) destinés à coulisser dans au moins un rail (17, 18).

12. Dispositif d'occultation selon la revendication 11, **caractérisé en ce que** lesdits moyens de guidage (15, 16) coopèrent avec des moyens de blocage dans au moins une position prédéterminée intermédiaire entre ladite position repliée et ladite au moins une position déployée.

13. Dispositif d'occultation selon l'une quelconque des revendications 11 et 12, **caractérisé en ce que,** lesdits moyens de guidage (15, 16) coulissant dans deux rails (17, 18) non parallèles, lesdits moyens de stockage (12) comprennent des moyens de compensation (19, 110) de l'écartement variable desdits rails (17, 18).

14. Dispositif d'occultation selon l'une quelconque des revendications 11 à 13, **caractérisé en ce que** lesdits moyens de guidage (15, 16) sont motorisés.

15. Dispositif d'occultation selon l'une quelconque des revendications 1 à 14, **caractérisé en ce qu'**il est destiné à occulter au moins un des éléments appartenant au groupe comprenant :
- les pavillons ;
- les pare-brise ;
- les vitres latérales ;
- les vitres de custode ;
- les vitres arrière ;
- les toits ouvrants ; et/ou
- les espaces destinés à recevoir les bagages.

16. Véhicule automobile comprenant au moins une surface vitrée et un élément fixe (113) **caractérisé en ce qu'**il comprend au moins un dispositif d'occultation (10) pour ladite surface vitrée comprenant des moyens d'occultation (11) pouvant prendre au moins deux positions, une position repliée et au moins une position déployée, et dont une première extrémité (1111) est solidarisée à une barre de tirage (14) et une deuxième extrémité (1121) audit élément fixe (113), et comprenant des moyens de stockage (12) desdits moyens d'occultation (11) montés entre lesdites première (1111) et deuxième (1121) extrémités, de façon que lesdits moyens d'occultation (11) soient déployés de part et d'autre desdits moyens de stockage (12),
lesdits moyens de stockage (12) comprenant des moyens de mise en forme destinés à maintenir lesdits moyens d'occultation (11) dans une forme galbée prédéterminée dans la ou lesdites positions déployées.
